(19) Europäisches Patentamt
European Patent Office
Office européen des brevets

(11) **EP 0 987 927 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.⁷: **H05B 37/02**, H05B 41/392

(21) Anmeldenummer: **99117360.0**

(22) Anmeldetag: **03.09.1999**

(54) **Verfahren zur Konstantlichtregelung**

Process for maintaining the intensity of light constant

Procédé pour maintenir l'intensité lumineuse constante

(84) Benannte Vertragsstaaten:
**AT BE CH CY DE DK ES FI FR GB GR IE IT LI LU MC NL PT SE**

(30) Priorität: **16.09.1998 DE 19842465**

(43) Veröffentlichungstag der Anmeldung:
**22.03.2000 Patentblatt 2000/12**

(73) Patentinhaber: **SIEMENS AKTIENGESELLSCHAFT**
**80333 München (DE)**

(72) Erfinder: **Zirkl, Siegmar, Dipl.-Ing.**
**93051 Regensburg (DE)**

(56) Entgegenhaltungen:
**EP-A- 0 410 484          EP-A- 0 807 877**
**FR-A- 2 174 679          US-A- 4 273 999**
**US-A- 4 701 669**

**Beschreibung**

Die Erfindung betrifft ein Verfahren zur Konstantlichtregelung, bei dem innerhalb eines zu beleuchtenden Raumes ein Referenzwert der Beleuchtungsstärke gemessen wird, und bei dem durch geregelte Einstrahlung von Kunstlicht die Beleuchtungsstärke einem vorbestimmten Sollwert angeglichen wird.

Eine derartige Konstantlichtregelung, wie sie prinzipiell aus der US 4,701,669 bekannt ist, wird üblicherweise eingesetzt, um bei einer Raumbeleuchtung Energiekosten bei gleichzeitig hohem Beleuchtungskomfort einzusparen. Üblicherweise wird dabei ein gemessener Referenzwert in einer Regeleinheit mit einem Sollwert verglichen. Bei einer Abweichung des Referenzwertes vom Sollwert gibt die Regeleinheit ein Steuersignal an die im Raum verteilten Beleuchtungskörper aus, welches eine Erhöhung oder Erniedrigung des Kunstlichtpegels im Raum herbeiführt. Das Steuersignal ist dabei üblicherweise ein relativer Sprungbefehl, d.h. es beinhaltet lediglich die Information heller bzw. dunkler, nicht jedoch eine Information über den absoluten Grad der Helligkeit.

Bei vergleichsweise einfachen Anlagen zur Konstantlichtregelung ist ein zentral im Raum angeordneter Helligkeitssensor vorgesehen, der alle Beleuchtungskörper des Raumes gemeinsam ansteuert. Eine derartige Konstantlichtregelung bewirkt zwar an dem Ort des Helligkeitssensors bei schwachem Tageslichteinfall eine Erhellung des Raumes auf den Sollwert. Jedoch ist der damit erzielte Beleuchtungskomfort und der eingesparte Energiebetrag vergleichsweise gering, da der Tageslichtanteil der Beleuchtungsstärke im Raum nicht konstant ist. Dies führt dazu, dass der fern der Fenster angeordnete Raumbereich nur vergleichsweise schwach ausgeleuchtet ist, während der Sollwert im fensternahen Bereich oft um ein Vielfaches überschritten wird.

Eine gleichmäßige Ausleuchtung des Raumes kann erzielt werden, indem innerhalb des Raumes mehrere Beleuchtungsgruppen vorgesehen sind. Dabei wird in jedem Ausleuchtungsbereich jeder einzelnen Beleuchtungsgruppe ein gruppenspezifischer Referenzwert der Ist-Beleuchtungsstärke gemessen. Die Helligkeitsregelung erfolgt somit dezentral in voneinander unabhängigen Regelkreisläufen. Eine solche Anordnung trägt zwar zu einem hohen Beleuchtungskomfort und einer hohen Energieersparnis bei. Jedoch steigt in nachteiliger Weise der Kostenaufwand einer solchen Konstantlichtregelung mit der Anzahl der vorgesehenen Beleuchtungsgruppen, da pro Beleuchtungsgruppe eine separate Regelung erforderlich ist. Insbesondere bei einem großen Raum, zu dessen gleichmäßiger Ausleuchtung eine hohe Anzahl unabhängiger Beleuchtungsgruppen erforderlich wäre, ist daher eine dezentrale Konstantlichtregelung unrentabel. Ein weiterer Nachteil einer solchen Regelung liegt darin, dass sich die verschiedenen Regelkreisläufe untereinander beeinflussen. Dies kann unter Umständen zu Kopplungseffekten zwischen den Regelkreisen führen, die sich in unkontrollierbaren Helligkeitsschwankungen äußern. Der Beleuchtungskomfort wird durch solche Kopplungseffekte extrem herabgesetzt.

Ferner sind Verfahren zur Helligkeitssteuerung bekannt. Bei einem solchen, in der EP 0 410 484 A1 beschriebenen Verfahren erfolgt die Helligkeitssteuerung anhand der von einem oder mehreren Außenlichtsensoren ermittelten Außenhelligkeit. Die Ansteuerungen des oder der im Raum vorgesehenen Beleuchtungskörper erfolgt bei dem bekannten Verfahren anhand von hinterlegten Funktionen, in welchen Dimmwerte in Abhängigkeit der Außenhelligkeits stärke-und-richtung und des Ortes (x, y) im Raum festgelegt sind.

Aus der EP 0 807 877 A1 ist weiterhin ein Verfahren zur manuellen Helligkeitssteuerung mehrerer Beleuchtungskörper bekannt, bei welchen die Gesamthelligkeit des Raums bei gleichbleibendem Lichtstärkenverhältnis der einzelnen Lichtquellen einstellbar ist. Die Lichtquellen umfassen hierbei zusätzlich zu den Beleuchtungskörpern ein Fenster mit einer ansteuerbaren Verdunklungsanlage.

Der Erfindung liegt daher die Aufgabe zugrunde, ein Verfahren für eine Konstantlichtregelung anzugeben, bei dem mit einfachen Mitteln ein hoher Beleuchtungskomfort und eine hohe Energieersparnis erzielt wird.

Diese Aufgabe wird erfindungsgemäß gelöst durch ein Verfahren mit den Merkmalen des Anspruchs 1. Dabei wird einer zentralen Regeleinheit ein gemessener Referenzwert der Ist-Beleuchtungsstärke zugeführt und dort mit einem vorbestimmten Sollwert verglichen. Unter Heranziehung hinterlegter, gruppenspezifischer Wichtungsfaktoren steuert die Regeleinheit mehrere Beleuchtungsgruppen getrennt an. Als Beleuchtungsgruppe werden dabei ein oder mehrere gemeinsam angesteuerte Beleuchtungskörper bezeichnet. Die an die Beleuchtungsgruppen ausgegebenen Steuersignale sind dabei derart gewichtet, daß der Kunstlichtverlauf im Raum gegenläufig zum Tageslichtverlauf ist. Dadurch wird die Ortsabhängigkeit des Tageslichtsanteils der Ist-Beleuchtungsstärke kompensiert.

Ein wesentlicher Vorteil des Verfahrens liegt darin, daß lediglich eine einzelne zentrale Regeleinheit und eine einzelne Referenzwertmessung erforderlich sind. Das Verfahren kann daher vergleichsweise einfach und kostengünstig realisiert werden. Da lediglich ein einziger Regelkreis vorhanden ist, können desweiteren auch keine störenden Kopplungseffekte auftreten. Infolge des an den Tageslichtverlauf im Raum angepaßten Beleuchtungsprofils wird ein besonders hoher Beleuchtungskomfort erzielt. Dies äußert sich auch in einem besonders niedrigen Energieverbrauch, zumal eine Überschreitung des Sollwerts innerhalb des gesamten Raumes weitgehend vermieden ist.

In bevorzugter Ausgestaltung wird zur Berechnung der Wichtungsfaktoren der ortsabhängige Tageslichtquotient des zu beleuchtenden Raumes herangezogen. Der Tageslichtquotient ist dabei als Verhältnis des Tageslichtes (lux) in einem Punkt des Raumes zur Horizontalbeleuchtungsstärke im Freien (lux) definiert. Der Tageslichtquotient gibt den Tageslichtverlauf im Raum näherungsweise unabhängig von der aktuellen Tageslichtsituation wieder und ist daher eine charakteristische Eigenschaft des zu beleuchtenden Raumes. Diese hängt insbesondere von der Geometrie des Raumes, der Anordnung der Fenster sowie von den Materialien und Farben innerhalb des Raumes ab. Der Tageslichtquotient stellt somit eine einfach zu bestimmende und besonders aussagekräftige Größe für den Wichtungsfaktor dar.

Zweckmäßigerweise wird die Messung des Tageslichtquotienten auf einzelne Ortswerte beschränkt, von denen jeweils einer im Ausleuchtungsbereich einer jeden Beleuchtungsgruppe angeordnet ist. Als Ausleuchtungsbereich einer Beleuchtungsgruppe wird dabei ein Raumbereich bezeichnet, in dem der Beitrag dieser Beleuchtungsgruppe an der gesamten Beleuchtungsstärke gegenüber den Beiträgen benachbarter Beleuchtungsgruppen besonders groß ist. Bei einer in herkömmlicher Art und Weise an der Raumdecke angebrachten Beleuchtungsgruppe gehört insbesondere der direkt unter der Beleuchtungsgruppe gelegene Raumbereich zu deren Ausleuchtungsbereich. Mit der Beschränkung auf einen Ortswert des Tageslichtquotienten pro Beleuchtungsgruppe wird eine effektive Regelung bei gleichzeitig besonders geringer zu verarbeitender Datenmenge erzielt.

Im Gegensatz zu herkömmlichen Verfahren, bei denen das Steuersignal als relativer Sprungwert (heller/dunkler) ausgegeben wird, ist das Steuersignal bei dem erfinderischen Verfahren ein absoluter Dimmwert, d.h. ein Maß für die absolute Kunstlichtstärke. Durch die Ausgabe absoluter Steuersignale wird vorteilhafterweise eine besonders schnelle und zuverlässige Regelung erzielt, zumal sämtliche Rechnungen zentral in der Regeleinheit durchgeführt werden und die für die Regelung benötigten Informationen jederzeit greifbar sind.

In vorteilhafter Weiterbildung ist in den Wichtungsfaktoren die zeitliche Veränderung'des Sonnenstandes berücksichtigt. Dies trägt der Tatsache Rechnung, daß der Verlauf des Tageslichtquotienten im Raum eine Abhängigkeit vom Sonnenstand aufweist. Zur Anpassung der Regelung an den veränderlichen Sonnenstand können mehrere Sätze von Wichtungsfaktoren vorgesehen sein, die jeweils für eine bestimmte Tages- und/oder Jahreszeit spezifisch sind. Je nach Tages- und/oder Jahreszeit kann dann der entsprechende Satz von Wichtungsfaktoren zur Regelung herangezogen werden. Alternativ dazu ist es denkbar, die Wichtungsfaktoren fortlaufend aus einem standardisierten, fest vorgegebenen Verlauf des Tageslichtkoeffizienten zu errechnen, wobei dieser Verlauf mit einer empirischen mathematischen Modellfunktion entsprechend der Tages- und/oder Jahreszeit modifiziert wird.

Eine weitere Verfeinerung der Regelung wird dadurch erzielt, daß die Wichtungsfaktoren in Abhängigkeit vom Betriebszustand einer Raumverdunkelungsanlage veränderlich sind. Eine solche Raumverdunkelungsanlage verändert üblicherweise den Verlauf des Tageslichtkoeffizienten durch Verkleinerung der Fensterfläche oder Ausblendung bestimmter Einstrahlrichtungen.

Bevorzugt werden die Wichtungsfaktoren bezüglich einer Referenz-Beleuchtungsgruppe normiert, in deren Ausleuchtungsbereich die Messung des Referenzwertes stattfindet. Dabei ist der der Referenz-Beleuchtungsgruppe zugeordnete Wichtungsfaktor auf den Wert 1 gesetzt, während die übrigen Wichtungsfaktoren die relative Lichtstärke der zugehörigen Beleuchtungsgruppen gegenüber der Referenz-Beleuchtungsgruppe angeben. Die Normierung der Wichtungsfaktoren erlaubt eine besonders einfache Durchführung der Regelung. Insbesondere kann jede beliebige Beleuchtungsgruppe als Referenz-Beleuchtungsgruppe herangezogen werden. Es kann somit vorteilhafterweise eine Beleuchtungsgruppe als Referenz-Beleuchtungsgruppe ausgewählt werden, in deren Ausleuchtungsbereich die Beleuchtungsstärke von besonders wenigen Störfaktoren beeinflußt ist. Ein solcher Störfaktor ist beispielsweise jede Art von Bewegung, die eine vorübergehende Änderung der lokalen Lichtverhältnisse hervorruft.

Nachfolgend wird ein Ausführungsbeispiel der Erfindung anhand einer Zeichnung näher erläutert. Darin zeigen:

FIG 1    schematisch eine Anordnung für eine Konstantlichtregelung in einem zu beleuchtenden Raum,

FIG 2    den Verlauf des Tageslichtkoeffizienten in Abhängigkeit von der Raumtiefe des Raumes gemäß FIG 1,

FIG 3    den Tageslichtanteil der Beleuchtungsstärke an einem hellen Tag sowie an einem trüben Tag in Abhängigkeit von der Raumtiefe,

FIG 4    den Kunstlichtanteil der Beleuchtungsstärke an einem trüben sowie an einem hellen Tag in Abhängigkeit von der Raumtiefe, und

FIG 5    in einem Flußdiagramm die Regelschleife einer Konstantlichtregelung.

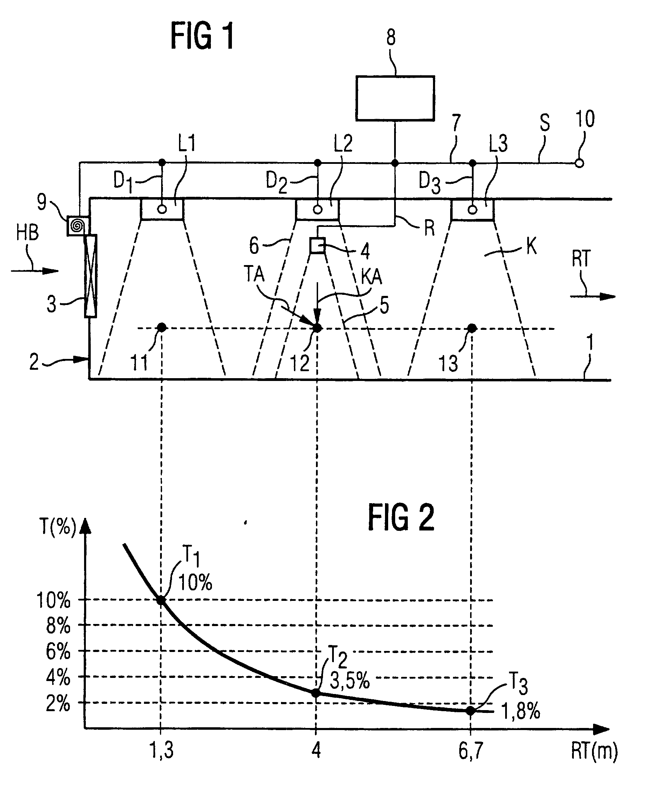

FIG 1 zeigt schematisch einen zu beleuchtenden Raum 1, der an einer Fensterseite 2 mit einer Reihe von senkrecht zur Bildebene aufeinanderfolgenden Fenstern 3 versehen ist. Der Abstand eines Punktes innerhalb des Raumes 1 zu der Fensterseite 2 wird dabei als Raumtiefe RT bezeichnet. Zur Beleuchtung des Raumes 1 mit Kunstlicht K sind drei Beleuchtungsgruppen Li (mit i = 1,2,3) vorgesehen, die sich jeweils parallel zur Fensterseite 2 erstrecken und zueinander beabstandet in unterschiedlichen Raumtiefen RT angeordnet sind. Gemäß dem in FIG 2 angeführten Zahlenbeispiel befinden sich dabei die Beleuchtungsgruppen L1, L2 und L3 in einer Raumtiefe RT von 1,3 m, 4 m bzw. 6,7 m.

Innerhalb des Raumes 1 ist desweiteren ein Helligkeitssensor 4 angeordnet. Der Helligkeitssensor 4 ist etwa auf gleicher Raumtiefe RT mit der'mittleren Beleuchtungsgruppe L2 angeordnet und derart ausgerichtet, daß sich sein Erfassungskegel 5 innerhalb des Ausleuchtungsbereichs 6 der Beleuchtungsgruppe L2 befindet. Mit dieser Anordnung wird erreicht, daß der Helligkeitssensor 4 lediglich geringe Helligkeitsbeiträge der Beleuchtungsgruppen L1 und L3 detektiert. Der Helligkeitssensor 4 ist daher der Beleuchtungsgruppe L2 zugeordnet, die somit als Referenz-Beleuchtungsgruppe wirkt.

Die Beleuchtungsgruppen Li und der Helligkeitssensor 4 sind über eine Busleitung 7 mit einer Regeleinheit 8 verbunden. Gemäß FIG 1 sind der Helligkeitssensor 4 und die Regeleinheit 8 als getrennte Einheiten dargestellt. Alternativ können der Helligkeitssensor 4 und die Regeleinheit 8 platzsparend in einem gemeinsamen Bauelement integriert sein. Über die Busleitung 7 wird der Regeleinheit 8 ein vom Helligkeitssensor 4 gemessener Referenzwert R der Beleuchtungsstärke zugeführt. Die Beleuchtungsstärke ist dabei aus einem Tageslichtanteil TA und aus einem Kunstlichtanteil KA gebildet. Die Regeleinheit 8 gibt ihrerseits Steuersignale in Form von Dimmwerten $D_i$, mit i=1,2,3, an die entsprechenden Beleuchtungsgruppen Li ab. Der Dimmwert $D_i$ bestimmt dabei weitgehend den Ortswert $KA_i$ des Kunstlichtanteils KA unterhalb der Beleuchtungsgruppe Li. Dabei wird vorausgesetzt, daß ein hoher Dimmwert $D_i$ einem hohen Ortswert $KA_i$ entspricht.

An die Busleitung 7 ist desweiteren eine Raumverdunkelungsanlage 9, z.B. eine Jalousie, angeschlossen. Die Busleitung 7 enthält außerdem eine Schnittstelle 10, über welche Daten zur Einstellung und Kontrolle der Konstantlichtregelung übertragen werden können. Insbesondere kann über die Schnittstelle 10 ein Sollwert S der Beleuchtungsstärke vorgegeben werden.

Der Tageslichtanteil TA nimmt mit wachsender Raumtiefe RT ab. Ein Maß für den Verlauf des Tageslichtanteils TA innerhalb des Raumes 1 ist der sogenannte Tageslichtkoeffizient T, der in FIG 2 in Abhängigkeit von der Raumtiefe RT dargestellt ist. Der Ortswert $T_i$ des Tageslichtkoeffizienten T ist dabei definiert als das Verhältnis zwischen dem an einem Meßpunkt 11,12,13 des Raumes 1 gemessenen Tageslichtanteils TA und der Horizontal-Beleuchtungsstärke HB im Freien. Bei dem Zahlenbeispiel gemäß FIG 2 würde somit im Meßpunkt 11 unterhalb der Beleuchtungsgruppe L1 10 % der Horizontal-Beleuchtungsstärke HB gemessen, entsprechend dem Ortswert $T_1$ = 10 %. Der im Meßpunkt 12 unterhalb der Beleuchtungsgruppe L2 gemessene Ortswert $T_2$ beträgt dann 3,5 %, während der im Meßpunkt 13 unterhalb der Beleuchtungsgruppe L3 gemessene Ortswert $T_3$ lediglich 1,8 % beträgt.

Der Verlauf des Tageslichtkoeffizienten T, und somit das Verhältnis der Ortswerte $T_1$:$T_2$:$T_3$, ist charakteristisch für den zu beleuchtenden Raum 1. Das heißt, der Verlauf des Tageslichtkoeffizienten T ist abhängig von der Geometrie des Raumes 1, von der Größe und der Ausrichtung der Fenster 3 sowie von den Eigenschaften der innerhalb des Raumes 1 verwendeten Materialien. Er ist jedoch unabhängig von der Horizontal-Beleuchtungsstärke HB.

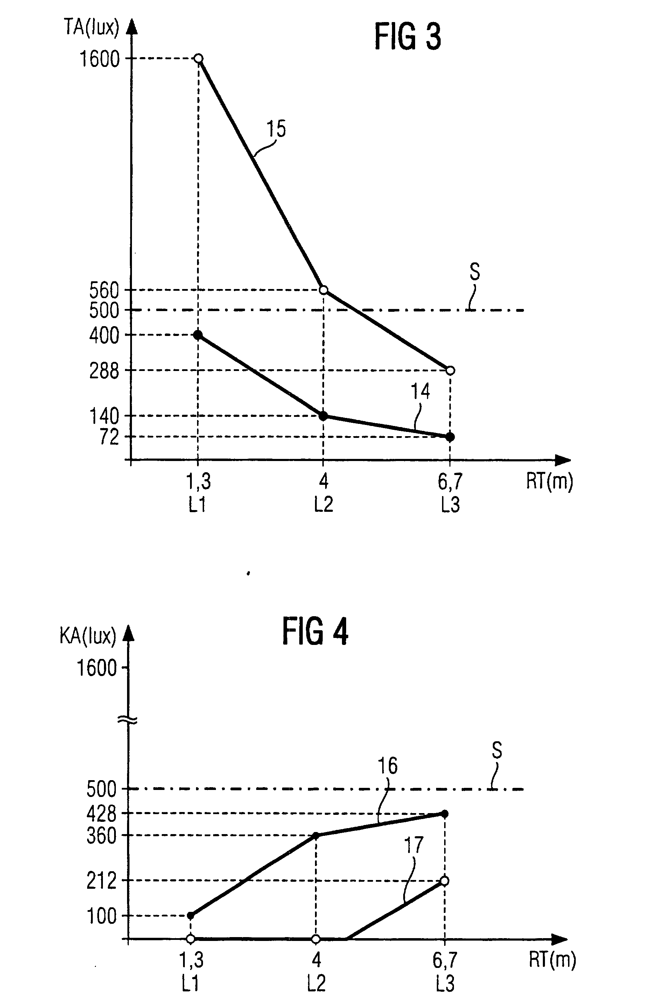

Zur Verdeutlichung ist in FIG 3 der Tageslichtanteil TA linearisiert in Abhängigkeit der Raumtiefe RT dargestellt. Die Symbole entsprechen den Ortswerten $TA_i$ unterhalb der Beleuchtungsgruppen L1,L2 und L3. Die mit ausgefüllten Symbolen bezeichnete Kurve 14 entspricht dabei dem Tageslichtverlauf an einem vergleichsweise trüben Tag mit einer Horizontal-Beleuchtungsstärke HB von 4000 lux. Die mit leeren Symbolen bezeichnete Kurve 15 entspricht dem Tageslichtverlauf an einem vergleichsweise hellen Tag mit einer Horizontal-Beleuchtungsstärke HB von 16000 lux. Dabei ist ersichtlich, daß die Helligkeitsunterschiede zwischen verschiedenen Punkten im Raum 1 an einem hellen Tag gemäß Kurve 15 wesentlich größer sind als die vergleichbaren Helligkeitsunterschiede an einem trüben Tag gemäß Kurve 14. Jedoch ist das Verhältnis der an den Meßpunkten 11,12,13 gemessenen Ortswerten des Tageslichtanteils TA stets etwa gleich dem Verhältnis der Tageslichtkoeffizienten $T_1$:$T_2$:$T_3$.

Der sich im Verlauf eines Tages und im Verlauf eines Jahres zyklisch ändernde Sonnenstand kann Änderungen im Verlauf des Tageslichtkoeffizienten T hervorrufen. Weitere Änderungen im Verlauf des Tageslichtkoeffizienten T sind zu erwarten, wenn die Raumverdunkelungsanlage 9 betätigt wird. Solche Änderungen im Verlauf des Tageslichtkoeffizienten T - und damit des Verlaufs des Tageslichtanteils TA - sind in der bisherigen Betrachtung vernachlässigt.

Als Sollwert S für die Beleuchtungsstärke ist gemäß dem Zahlenbeispiel ein für alle Beleuchtungsgruppen Li konstanter Pegel von 500 lux (FIG 3) vorgesehen. Die Konstantlichtregelung gewährleistet dabei, daß im Bereich jeder Beleuchtungsgruppe Li der Fehlbetrag zwischen dem Sollwert S und dem Tageslichtanteil TA durch eingestrahltes Kunstlicht K ausgeglichen wird. Der von den Beleuchtungsgruppen Li aufzubringende Kunstlichtanteil KA der Beleuchtungsstärke ist somit durch die Beziehung

$$KA_1 = S - T_1 * HB \qquad (1)$$

bestimmt und in FIG 4 dargestellt. Dabei korrespondiert die mit ausgefüllten Symbolen bezeichnete Kurve 16 mit dem Tageslichtverlauf 14 an einem trüben Tag, während die mit leeren Symbolen bezeichnete Kurve 17 mit dem Tageslichtverlauf 15 an einem hellen Tag korrespondiert. Wie aus einer Zusammenschau der Figuren 3 und 4 hervorgeht, genügt das Tageslicht an einem trüben Tag gemäß der Kurve 14 im Bereich keiner Beleuchtungsgruppe Li, um den Sollwert S zu erreichen. Aus diesem Grund sind gemäß der Kurve 16 alle Beleuchtungsgruppen Li eingeschaltet. Jedoch wird die fensternahe Beleuchtungsgruppe L1 mit einem vergleichsweise niedrigen Dimmwert $D_1$ betrieben, während die Beleuchtungsgruppen L2 und L3 mit wachsender Raumtiefe RT zunehmend stark leuchten. Dagegen genügt an einem hellen Tag gemäß der Kurve 15 das Tageslicht lediglich im Bereich der Beleuchtungsgruppe L3 zur Erreichung des Sollwertes S nicht aus. Im Bereich der Lampengruppen L1 und L2 wird dagegen der Sollwert S allein durch das Tageslicht bereits überschritten. In diesem Fall ist gemäß der Kurve 17 lediglich die Lampengruppe L3 eingeschaltet. Die Lampengruppen L1 und L2, für die die Gleichung (1) formal einen negativen Ortswert $KA_1, KA_2$ des Kunstlichtanteils KA liefert, sind völlig ausgeschaltet.

Die nicht dargestellte Beleuchtungssituation während der Nacht ist dadurch charakterisiert, daß der Tageslichtanteil TA im gesamten Raum 1 den Ortswert $TA_i = 0$ aufweist. Gemäß Gleichung (1) werden somit alle Beleuchtungsgruppen Li gleich angesteuert, so daß der Kunstlichtanteil KA für alle Ortswerte $KA_1$ gleich dem Sollwert S ist.

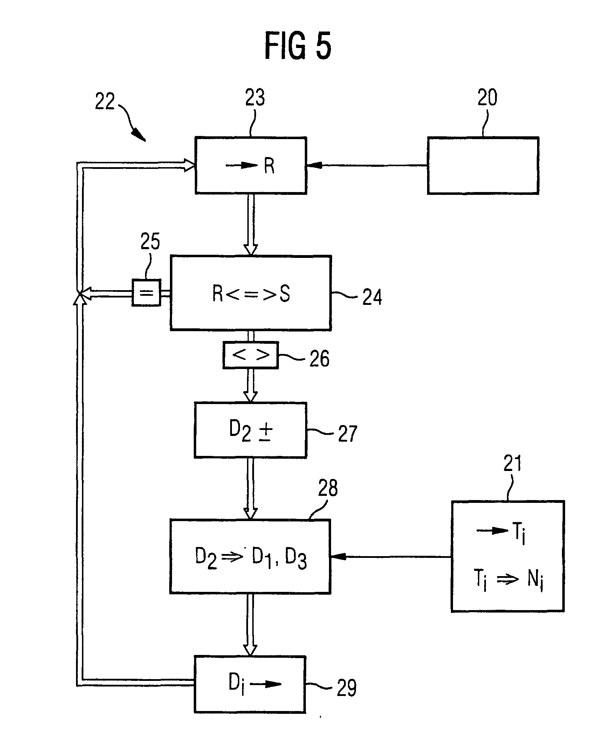

Die Funktionsweise der Konstantlichtregelung ist in einem Flußdiagramm gemäß FIG 5 skizziert. Vor Inbetriebnahme der Konstantlichtregelung ist zunächst eine Kalibrierung 20 des Helligkeitssensors 4 sowie eine Messung 21 des Tageslichtkoeffizienten T innerhalb des zu beleuchtenden Raumes 1 erforderlich. Zur Kalibrierung wird der vom Helligkeitssensor 4 gemessene Referenzwert R mit dem Anzeigewert eines etwa im Meßpunkt 12 ausgelegten, geeichten (nicht dargestellten) Luxmeters abgeglichen. Zur Messung 21 des Tageslichtkoeffizienten T wird mittels des Luxmeters jeweils in einem Meßpunkt 11,12,13 im Ausleuchtungsbereich 6 jeder Beleuchtungsgruppe Li bei ausgeschaltetem Kunstlicht K die Beleuchtungsstärke gemessen. Durch Quotientenbildung aus der gemessenen Beleuchtungsstärke $TA_1 + KA_i$ im Meßpunkt 11,12,13 und der Horizontal-Beleuchtungsstärke HB im Freien werden die Ortswerte $T_i$ des Tageslichtkoeffizienten T gemäß FIG 2 ermittelt. Diese Ortswerte $T_i$ werden der Regeleinheit 8 als Datensatz zur Verfügung gestellt. Vorzugsweise werden die Ortswerte $T_i$ bezüglich der Beleuchtungsgruppe L2 normiert, d.h. durch den Ortswert $T_2$ dividiert. Die normierten Ortswerte $T_i/T_2$ werden im folgenden als Verhältnisfaktoren $N_i$ bezeichnet. Aus dem vorerwähnten Verhältnis der Ortswerte $T_1:T_2:T_3 = 10\%:3,5\%:1,8\%$ ergibt sich somit das Verhältnis der Verhältnisfaktoren $N_1:N_2:N_3 = 2,857:1:0,5141$.

Die Konstantlichtregelung weist einen Regelkreis 22 auf, dessen Prozesse zyklisch durchlaufen werden. Der Regelkreis 22 beginnt mit einem Einleseprozeß 23, bei dem der Referenzwert R mittels des Helligkeitssensors 4 gemessen und in die Regeleinheit 8 eingelesen wird. In einem darauf folgenden Vergleichsprozeß 24 wird mittels der Regeleinheit 8 der Referenzwert R mit dem vorgegebenen Sollwert S verglichen. Gibt der Vergleichsprozeß 24 die Gleichheit 25 des Referenzwertes R mit dem Sollwert S wieder, so wird das weitere Durchlaufen des Regelkreises 22 unterbunden und der Einleseprozeß 23 erneut durchgeführt. Stellt der Vergleichsprozeß 24 jedoch eine Abweichung 26 des Referenzwertes R gegenüber dem Sollwert S fest, so wird ein Schrittprozeß 27 durchlaufen. Im Schrittprozeß 27 wird der Dimmwert $D_2$ der Beleuchtungsgruppe L2 gegenläufig zur der festgestellten Abweichung 26 verändert. Der Dimmwert $D_2$ wird also um einen Regelschritt erhöht, wenn im Vergleichsprozeß 24 das Ergebnis R < S festgestellt wurde. Ebenso wird der Dimmwert $D_2$ um einen Regelschritt erniedrigt, wenn im Vergleichsprozeß 24 das Ergebnis R > S festgestellt wurde. In einem anschließenden Rechenprozeß 28 werden die Dimmwerte $D_1$ und $D_3$ der Beleuchtungsgruppen L1 bzw. L3 derart bestimmt, daß die Gleichung

$$KA_i = S - N_1 * (S - KA_2) \qquad (2)$$

erfüllt ist. Die Verhältnisfaktoren $N_i$ werden dabei als Wichtungsfaktoren herangezogen. Gleichung (2) geht mathematisch aus der vorerwähnten Gleichung (1) hervor. In einer Weiterbildung, in der die Veränderung des Verlaufs des Tageslichtkoeffizienten T in Abhängigkeit des Sonnenstandes und des Betriebszustandes der Raumverdunkelungsanlage 9 berücksichtigt ist, ist jedem Verhältnisfaktor $N_i$ eine empirische Modellfunktion $f_i$ zugeordnet, die vom Datum, der Uhrzeit und dem Betriebszustand der Raumverdunkelungsanlage 9 abhängig ist. Unter Heranziehung dieser Parameter erfolgt die Bestimmung der Dimmwerte $D_i$ gemäß der modifizierten Gleichung

$$KA_i = S - f_i * N_1 * (S - KA_2). \qquad (3)$$

Jeder Ortswert $KA_i$ wird anschließend in den korrespondierenden Dimmwert $D_i$ umgesetzt. Die neuen Dimmwerte $D_1, D_2, D_3$ werden in einem abschließenden Ausgabeprozeß 29 als Steuersignal an die Beleuchtungsgruppen L1, L2 bzw. L3 ausgegeben. Infolge des Rechenprozesses 28 sind die Dimmwerte $D_i$ stets derart gewichtet, daß der Verlauf des Kunstlichtanteils KA den Verlauf des Tageslichtanteils TA kompensiert. Der Regelkreislauf 22 wird solange durchlaufen, bis der Referenzwert R mit dem Sollwert S übereinstimmt. Infolge der beschriebenen Wichtung der Dimmwerte $D_i$ ist damit gewährleistet, daß die Beleuchtungsstärke im Ausleuchtungsbereich 6 jeder Beleuchtungsgruppe Li mit dem Sollwert S übereinstimmt.

## Patentansprüche

1. Verfahren zur Konstantlichtregelung, bei dem innerhalb eines zu beleuchtenden Raumes (1) ein Referenzwert (R) der Beleuchtungsstärke (TA+KA) gemessen wird, und bei dem durch geregelte Einstrahlung von Kunstlicht (K) die Beleuchtungsstärke (TA+KA) einem vorbestimmten Sollwert (S) angeglichen wird, **dadurch gekennzeichnet, dass** mehrere Beleuchtungsgruppen (Li) von einer zentralen Regeleinheit (8) getrennt angesteuert werden, und dass das jeder einzelnen Beleuchtungsgruppe (Li) zugehörige Steuersignal ($D_i$) mit einem hinterlegten, gruppenspezifischen Wichtungsfaktors ($N_i$) derart gewichtet wird, dass die Ortsabhängigkeit des Tageslichtanteils (TA) der Beleuchtungsstärke (TA+KA) durch das von den Beleuchtungsgruppen (Li) eingestrahlte Kunstlicht (K) kompensiert wird, wobei zur Bestimmung der Wichtungsfaktoren ($N_i$) der hinterlegte ortsabhängige Tageslichtquotient (T) des zu beleuchtenden Raumes (1) herangezogen wird.

2. Verfahren nach Anspruch 1, **dadurch gekennzeichnet, dass** im Ausleuchtungsbereich (6) einer jeden Beleuchtungsgruppe (Li) jeweils ein Ortswert ($T_i$) des Tageslichtquotienten (T) bestimmt wird.

3. Verfahren nach Anspruch 1 oder 2, **dadurch gekennzeichnet**, dass als Steuersignal ($N_i$) ein absoluter Dimmwert ($D_i$) ausgegeben wird.

4. Verfahren nach einem der Ansprüche 1 bis 3, **dadurch gekennzeichnet, dass** die Wichtungsfaktoren ($N_i$) zur Berücksichtigung der Veränderung des Sonnenstandes zeitlich veränderlich sind.

5. Verfahren nach einem der Ansprüche 1 bis 4, **dadurch gekennzeichnet, dass** die Wichtungsfaktoren ($N_i$) in Abhängigkeit vom Betriebszustand einer Raumverdunkelungsanlage (9) veränderlich sind.

6. Verfahren nach einem der Ansprüche 1 bis 5, **dadurch gekennzeichnet, dass** die Messung des Referenzwertes (R) im Ausleuchtungsbereich (6) einer Referenz-Beleuchtungsgruppe (L2) stattfindet, und dass die Wichtungsfaktoren ($N_i$) bezüglich der Referenz-Beleuchtungsgruppe (L2) normiert sind.

## Claims

1. Method of constant light control with a reference value (R) of the illuminance (TA+KA) being measured within a room (1) to be illuminated, and with the illuminance (TA+KA) being matched to a predetermined set value (S) by controlled irradiation of artificial light (K), **characterised in that** several groups of luminaires (Li) are controlled separately from a central control unit (8) and that the control signal ($D_i$) associated with each individual luminaire group (Li) is weighted with a stored, group-specific weighting factor ($N_i$) in such a way that the local dependency of the daylight content (TA) of the illuminance (TA+KA) is compensated for by the artificial light (K) irradiated by the luminaire groups (Li), with the stored location-dependent daylight quotient (T) of the room (1) to be illuminated being used to determined the weighting factors ($N_i$).

2. Method in accordance with Claim 1, **characterised in that** in the illumination area (6) of each luminaire group (Li) a local value ($T_i$) the daylight quotient (T) is determined in each case.

3. Method in accordance with Claims 1 or 2, **characterised in that** an absolute dimming value ($D_i$) is output as a control signal ($N_i$).

4. Method in accordance with one of Claims 1 to 3, **characterised in that** the weighting factors ($N_i$) can be changed to take account of the change in the position of the sun over time.

5. Method in accordance with one of Claims 1 to 4, **characterised in that** the weighting factors ($N_i$) can be changed relative to the operating status of a room darkening system (9).

6. Method in accordance with one of Claims 1 to 5, **characterised in that** the measurement of the reference value (R) takes place in the illumination area (6) of a reference luminaire group (L2), and that the weighting factors ($N_i$) are standardised relative to the reference luminaire group (L2).

## Revendications

1. Procédé pour maintenir l'intensité lumineuse constante, dans lequel on mesure dans une pièce (1) à éclairer une valeur (R) de référence de l'intensité (TA+KA) d'éclairage et dans lequel, par émission réglée de lumière (K) artificielle, on égalise l'intensité (TA+KA) d'éclairage à une valeur (S) de consigne déterminée à l'avance, **caractérisé en ce que** l'on commande séparément plusieurs groupes (Li) d'éclairage par une unité (8) centrale de régulation et **en ce que** l'on pondère le signal ($D_i$) de commande associé à chaque groupe (Li) d'éclairage par un facteur ($N_i$) de pondération mémorisé et spécifique au groupe, de façon à ce que la variation, en fonction de l'emplacement, de la proportion (TA) de lumière du jour dans l'intensité (TA+KA) d'éclairage soit compensée par la lumière (K) artificielle émise par les groupes (Li) d'éclairage, le quotient (T) de lumière du jour, en fonction du lieu et mémorisé de la pièce (1) à éclairer étant mis à profit pour la détermination des facteurs (Ni) de pondération.

2. Procédé suivant la revendication 1, **caractérisé en ce que** l'on détermine dans le domaine (6) d'éclairage de chaque groupe (Li) d'éclairage, respectivement, une valeur ($T_i$) locale du quotient (T) de lumière du jour.

3. Procédé suivant la revendication 1 ou 2, **caractérisé en ce que** l'on émet comme signal ($N_i$) de commande une valeur ($D_i$) absolue d'atténuation.

4. Procédé suivant l'une des revendications 1 à 3, **caractérisé en ce que** les facteurs ($N_i$) de pondération peuvent être modifiés dans le temps pour tenir compte de la variation de la hauteur du soleil.

5. Procédé suivant l'une des revendications 1 à 4, **caractérisé en ce que** les facteurs ($N_i$) de pondération peuvent être modifiés en fonction de l'état de fonctionnement d'une installation (9) d'assombrissement d'une pièce.

6. Procédé suivant l'une des revendications 1 à 5, **caractérisé en ce que** la mesure de la valeur (R) de référence a lieu dans le domaine d'éclairage d'un groupe (L2) d'éclairage de référence et **en ce que** les facteurs ($N_i$) de pondération sont normés par rapport aux groupes (L2) d'éclairage de référence.

# FIG 1

# FIG 2

FIG 3

FIG 4

# FIG 5